# FASCICULE DE BREVET EUROPEEN

(11) **EP 0 403 386 B1**
(45) Date de publication et mention de la délivrance du brevet: **14.07.1993**
(21) Numéro de dépôt: 90401653.2
(22) Date de dépôt: 14.06.1990
(51) Int. Cl.: B60S 1/38

(54) **Déflecteur à guidage de flux d'air**
Ablenkplatte mit Luftflussleitung
Deflector with air flow guiding

(30) Priorité: 15.06.1989 FR 8907968
(43) Date de publication de la demande: 19.12.1990
(73) Titulaire: VALEO SYSTEMES D'ESSUYAGE, 78180 Montigny-Le-Bretonneux (FR)
(72) Inventeur: Maubray, Daniel, F-92130 Issy-Les-Moulineaux (FR)
(74) Mandataire: Gamonal, Didier

(56) Documents cités:
- EP-A- 0 287 464
- FR-A- 2 556 297
- GB-A- 2 190 834

## Description

La présente invention se rapporte à un déflecteur de flux d'air, notamment pour véhicule automobile.

Un déflecteur, tel que celui décrit dans le document FR-A-2 621 288, présente une partie profilée comportant une première zone sensiblement plane s'étendant depuis un bord avant vers l'arrière, ladite première zone étant faiblement inclinée par rapport au plan moyen de la surface à essuyer, et une seconde zone faisant suite à la première d'inclinaison supérieure à l'inclinaison de la première zone ; ladite partie profilée se trouvant à une distance de la surface à essuyer suffisamment réduite pour créer un effet de sol produisant une dépression relativement importante au-dessous du déflecteur, c'est-à-dire dans la zone comprise entre la surface à essuyer et la partie profilée, ce qui permet d'appliquer correctement la raclette contre la surface à essuyer.

En outre, dans le document FR-A-2 556 297, il est prévu, dans la partie inférieure du déflecteur, des ouvertures autorisant le passage du flux d'air à travers le déflecteur.

On a donc proposé de monter ces types de déflecteur d'air sur les balais ou sur les bras d'essuie-glaces de manière à ce que, lors de l'essuyage sur un pare-brise incliné, le véhicule automobile étant en mouvement, l'essuyage soit facilité lors de la course de montée car le flux d'air, venant frapper le déflecteur, pousse le balai d'essuie-glace dans le même sens que le moteur d'entraînement, et lors de la course de descente la vitesse de descente du balai d'essuie-glace reste sensiblement égale à la vitesse de montée.

Pour cela il ne faut qu'aucune perturbation, telle qu'une éventuelle modification de la dépression sous le déflecteur, ne vienne entraver le bon fonctionnement dudit déflecteur.

La présente invention propose un déflecteur gardant ses caractéristiques et cela quel que soit son mouvement dans le flux d'air venant le balayer.

Selon l'invention, un déflecteur de flux d'air pour balai d'essuie-glace, notamment de véhicule automobile, comportant une partie profilée, des moyens d'accrochage sur un bras d'essuie-glace ou sur un balai d'essuie-glace, et un voile muni d'ouvertures et servant de liaison entre la partie profilée et les moyens d'accrochage (Déflecteur du type divulgué, par exemple, par FR-A-2 556 297), est caractérisé en ce que le déflecteur comporte en outre au moins une nervure associée à chaque ouverture de manière à guider le flux d'air venant balayer le déflecteur à travers lesdites ouvertures et à permettre ainsi de limiter la traînée qui s'oppose à l'avancement du réflecteur dans ledit flux.

Ces moyens permettent ainsi de pouvoir conférer au déflecteur un bon fonctionnement et cela quel que soit son mouvement pendant l'essuyage.

Selon un autre mode de réalisation de l'invention, la nervure est disposée orthogonalement à la direction longitudinale du déflecteur.

Selon un autre mode de réalisation de l'invention, la nervure est une nervure portée par la partie profilée en formant une dérive pour le flux d'air.

Grâce à ces dispositions, d'une part, la dérivation éventuelle du déflecteur dans le flux d'air est réduite et, d'autre part, les ouvertures prévues sur les moyens de liaison permettent de réduire la traînée, c'est-à-dire permettent de réduire la force qui s'oppose à l'avancement du déflecteur dans le flux d'air.

Les autres caractéristiques et avantages de l'invention ressortiront de la description qui va suivre, à titre d'exemple, en se référant aux dessins annexés sur lesquels :
- la figure 1 est une vue de face du déflecteur selon l'invention porté par un balai d'essuie-glace ;
- la figure 2 est une vue de dessus selon la figure 1 du déflecteur selon l'invention ;
- la figure 3 est une vue en coupe partielle du déflecteur selon la ligne AA de la figure 1 ;
- la figure 4 est une vue en coupe partielle selon la ligne BB de la figure 1 ;
- la figure 5 est une vue en coupe partielle selon la ligne CC de la figure 1 ;
- la figure 6 est un détail de réalisation, à plus grande échelle, d'une partie du déflecteur selon l'invention.

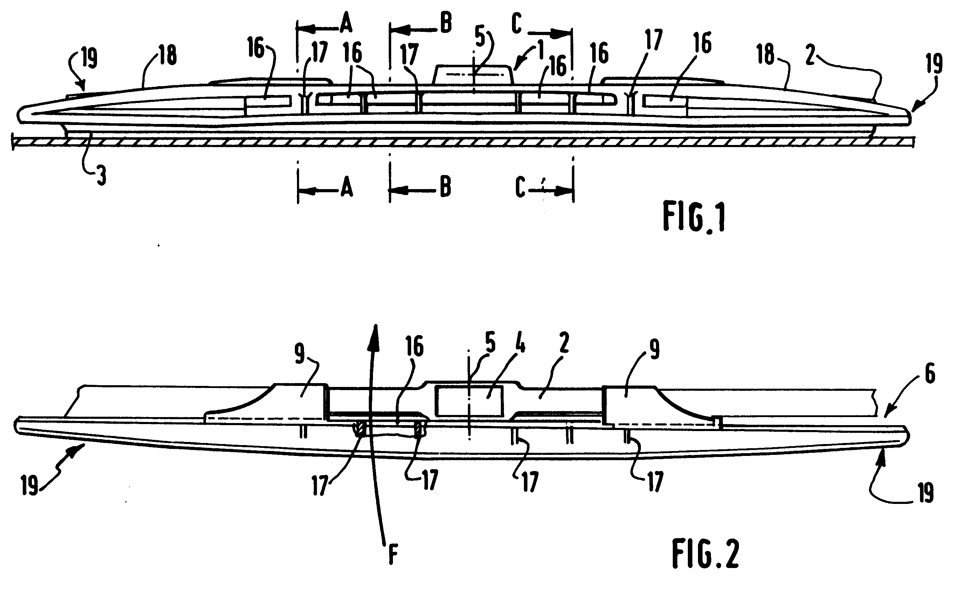

On se réfère maintenant aux figures 1 à 3 sur lesquelles on peut voir un balai d'essuie-glace 1, comprenant généralement une armature 2 apte à supporter une lame d'essuie-glace 3.

Cette armature, constituée généralement par un profilé à section transversale en U renversé, porte dans sa partie médiane une ouverture 4 pratiquée dans le fond du profil, ouverture dans laquelle est apte à être disposé un axe d'articulation 5 destiné à être engagé dans un logement d'une extrémité d'un bras d'essuie-glace (non représenté) pour assurer une liaison articulée entre le bras et le balai 1.

Le balai 1 est équipé d'un déflecteur d'air 6, qui est ici porté par le balai, mais qui peut être porté par le bras d'essuie-glace.

Le type de déflecteur d'air servant à la suite de la description est décrit plus précisément dans la demande de brevet susmentionnée et seules les grandes lignes directrices dudit déflecteur seront reprises.

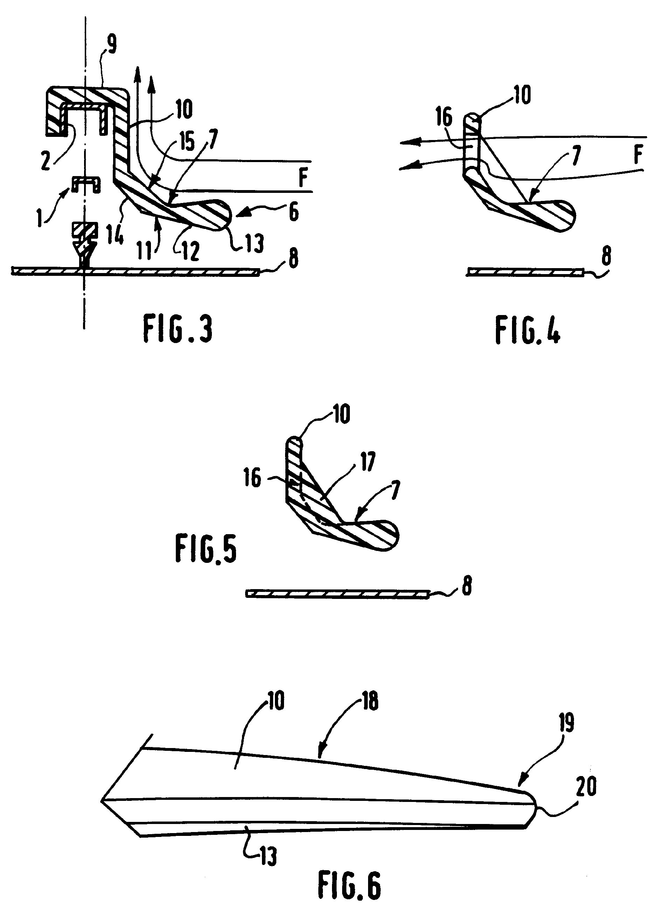

En se référant plus particulièrement à la figure 3, le déflecteur 6 présente une partie profilée 7, disposée à distance de la surface à essuyer 8, des moyens d'accrochage 9 sur l'armature 2 du balai d'essuie-glace 1 et un voile de liaison 10 permettant de relier la partie profilée 7 aux moyens d'accrochage 9.

La partie profilée 7 a une forme sensiblement convexe tournée vers la surface 8 et comporte, sur sa surface interne 11, une première zone 12 s'étendant depuis un bord externe 13 vers le balai 1 en étant inclinée par rapport à la surface 8 et une seconde zone 14 faisant suite à la première zone 12 en ayant un angle par rapport à la surface 8 plus grand que l'angle de la première zone 12.

La surface externe 15 de la partie profilée 7 a une forme de dièdre concave de façon à ce que l'épaisseur de ladite partie profilée diminue progressivement à partir du bord 13 vers le balai 1.

Comme mentionné précédemment, cette partie profilée 7 est raccordée au moyen d'accrochages 9 par un voile 10 formant moyen de liaison, ledit voile s'étendant dans la direction longitudinale dudit déflecteur et dans une direction sensiblement orthogonale à la surface à essuyer 8.

Comme mieux visible sur la figure 3, un flux d'air F, de direction sensiblement orthogonale à la direction longitudinale du déflecteur 6, est créé lors du mouvement du véhicule portant le balai d'essuie-glace et plus particulièrement lorsque ledit véhicule est à grande vitesse.

Ce flux d'air, sensiblement parallèle à la surface à essuyer 8, court le long de la surface externe 15 de la partie profilée 7 et vient continuer sa course le long du voile 10 servant de liaison entre la partie profilée et les moyens d'accrochage 9. Le voile 10 offre ainsi une résistance au flux d'air et une dispersion dudit flux le long du déflecteur, et il peut s'ensuivre un décrochage des filets d'air nuisant au bon fonctionnement de l'ensemble.

Selon l'invention le déflecteur d'air 6 porte des moyens de guidage du flux d'air F.

En se reportant plus particulièrement à la figure 4, le déflecteur 6 porte au moins une ouverture 16 apte à laisser passer le flux d'air F à travers ledit déflecteur.

Plus particulièrement, cette ouverture est portée par le voile 10, voile servant de moyen de liaison entre la partie profilée 7 et les moyens d'accrochage 9.

L'ouverture 16 est de forme sensiblement rectangulaire dont la plus grande dimension est disposée selon la direction longitudinale du déflecteur 6.

Comme mieux visible sur la figure 1, il est prévu une multiplicité d'ouvertures 16 réparties uniformément le long du voile 10, en étant disposées au voisinage l'une de l'autre, les dimensions longitudinales desdites ouvertures pouvant varier en fonction de leur emplacement sur le voile.

Associée à ces ouvertures est prévue, en outre, une nervure 17, comme mieux visible sur la figure 5.

Cette nervure est située ici entre deux ouvertures 16 successives et sert de dérive au flux d'air venant balayer le déflecteur 6 de façon à guider ledit flux d'air à travers lesdites ouvertures.

La nervure 17 est portée, d'une part, par la surface externe 15 de la partie profilée 7 et, d'autre part, par la surface externe du voile 10.

En pratique la nervure 17 a une forme trapézoïdale dont la grande base part de la surface externe du voile 10 et rejoint la surface externe 15 de la partie profilée 7, une petite base confondue avec la surface externe de la zone 14 de la partie profilée et des petits côtés s'appuyant respectivement sur la surface externe du voile 10 et sur la surface externe de la partie profilée 7.

La nervure 17 est disposée d'une manière telle que les bords latéraux de deux ouvertures 16 successives en regard de ladite nervure soient confondus avec les surfaces desdites nervures s'y rapportant.

Bien entendu, la nervure 17, tout en ayant une forme trapézoïdale ou toute autre forme, peut avoir sa grande base rejoignant les bords externes respectivement de la partie profilée 7 et du voile 10.

En se référant à la figure 1, il est prévu également une multiplicité de nervures 17 en relation avec les ouvertures 16, ici une nervure 17 située entre deux ouvertures 16.

Ainsi, comme mieux visible sur la figure 2, si un flux d'air F est dévié par rapport à la normale, les nervures 17 joueront le rôle d'une dérive de manière à dévier ledit flux d'air pour que celui-ci soit guidé vers les ouvertures 16 de façon à traverser celles-ci et à permettre ainsi de limiter la traînée qui s'oppose à l'avancement du déflecteur dans ledit flux.

De plus, ces nervures 17 servent de nervures de rigidification entre le voile 10 et la partie profilée 7.

En se référant à la figure 6, le déflecteur 6 comporte un autre moyen de guidage d'air, pouvant être associé éventuellement aux autres moyens précédemment décrits, et qui consiste en un profil courbe 18 disposé aux parties extrêmes 19 du déflecteur 6.

Comme mieux visible sur la figure 6, ce profil courbe consiste en une diminution de la hauteur du voile 10 jusqu'à l'extrémité 20 du déflecteur.

Cette diminution de hauteur se fait progressivement, à partir, par exemple, de l'emplacement des moyens d'accrochage 9, jusqu'à ce que la hauteur du voile 10 soit sensiblement nulle au niveau de la jonction avec la partie 14 de la partie profilée 7.

Ainsi le flux d'air F glisse le long de ce profil courbe qui permet ainsi audit flux de pouvoir continuer sa course sans créer de perturbation sur le déflecteur.

La présente invention n'est pas limitée aux exemples de réalisation décrits mais englobe toutes variantes.

Notamment, il peut être prévu que l'épaisseur des nervures 17 soit variable, par exemple, de la partie profilée 7 jusqu'au voile 10.

## Revendications

1. Déflecteur (6) de flux d'air pour balai d'essuie-glace, notamment de véhicule automobile, comportant une partie profilée (7), des moyens d'accrochage (9) sur un bras d'essuie-glace ou sur un balai d'essuie-glace, et un voile (10) muni d'ouvertures (16) et servant de liaison entre la partie profilée (7) et les moyens d'accrochage (9), caractérisé en ce que le déflecteur (6) comporte en outre au moins une nervure (17), associée à chaque ouverture (16) de manière à guider le flux d'air venant balayer le déflecteur (6) à travers lesdites ouvertures (16) et à permettre ainsi de limiter la traînée qui s'oppose à l'avancement du déflecteur dans ledit flux.

2. Déflecteur d'air selon la revendication 1, caractérisé en ce que la nervure (17) est disposée orthogonalement à la direction longitudinale du déflecteur (6).

3. Déflecteur selon l'une des revendications 1 ou 2, caractérisé en ce que la nervure (17) est portée par la partie profilée (7) en formant une dérive pour le flux d'air (F).

4. Déflecteur selon l'une des revendications 1 à 3, caractérisé en ce que la nervure (17) est située entre deux ouvertures (16) successives.

## Patentansprüche

1. Ablenkplatte (6) mit Luftflußleitung für eine Scheibenwischerleiste, insbesondere für ein Kraftfahrzeug, enthaltend einen Profilteil (7), Mittel zum Einhaken (9) an einem Scheibenwischerarm oder einer Scheibenwischerleiste sowie einen mit Öffnungen (16) versehenen Flansch (10) zur Verbindung zwischen dem Profilteil (7) und den Einhakmitteln (9), **dadurch gekennzeichnet,** daß die Ablenkplatte (6) außerdem wenigstens eine mit jeder einzelnen Öffnung (16) verbundene Rippe (17) aufweist, so daß der Luftstrom die Ablenkplatte (6) durch die genannten Öffnungen (16) beaufschlagt und damit eine Begrenzung des Luftwiderstands ermöglicht, der der Vorwärtsbewegung der Ablenkplatte im genannten Luftstrom entgegensteht.

2. Luftablenkplatte nach Anspruch 1, **dadurch gekennzeichnet,** daß die Rippe (17) orthogonal zur Längsrichtung der Ablenkplatte (6) angeordnet ist.

3. Ablenkplatte nach einem der Ansprüche 1 oder 2, **dadurch gekennzeichnet,** daß die Rippe (17) auf dem Profilteil (7) aufliegt und eine Drift für den Luftstrom (F) bildet.

4. Ablenkplatte nach einem der Ansprüche 1 bis 3, **dadurch gekennzeichnet,** daß die Rippe (17) zwischen zwei aufeinanderfolgenden Öffnungen (16) liegt.

## Claims

1. An air flow deflector (6) for a screen wiper, especially for a motor vehicle, comprising a profiled portion (7), means (9) for attachment on a screen wiper arm or on a screen wiper blade, and a web (10) formed with openings (16) and connecting the profiled portion (7) to the attachment means (9), characterised in that the deflector (6) further includes at least one rib (17), which is associated with each opening (16) in such a way as to guide through the said openings (16) the air stream impinging on the deflector (6), and so as also to enable the drag which opposes the forward movement of the deflector in the said stream to be limited.

2. An air deflector according to Claim 1, characterised in that the rib (17) is disposed orthogonally to the longitudinal direction of the deflector (6).

3. A deflector according to Claim 1 or Claim 2, characterised in that the rib (17) is carried by the profiled portion (7) to form a weir for the air flow (F).

4. A deflector according to one of Claims 1 to 3, characterised in that the rib (17) is situated between two successive openings (16).
